# EUROPÄISCHE PATENTANMELDUNG

(11) **EP 1 276 053 A1**
(43) Veröffentlichungstag der Anmeldung: **15.01.2003**
(21) Anmeldenummer: 02014968.8
(22) Anmeldetag: 09.07.2002
(51) Int. Cl.: G06F 13/38

(54) **Kodiereinrichtung und Dekodiereinrichtung**

(30) Priorität: 12.07.2001 DE 10133934
(71) Anmelder: Infineon Technologies AG, 81669 München (DE)
(72) Erfinder: von Wendorff, Wilhard Christophorus, Dr., 81241 - München (DE)
(74) Vertreter: Repkow, Ines, Dr. Dipl.-Ing.

(57) **Zusammenfassung**

Die beschriebene Kodiereinrichtung zeichnet sich dadurch aus, daß sie in der Lage ist, die zu kodierenden Daten in unterschiedliche Eigenschaften aufweisende Daten umzusetzen; die beschriebene Dekodiereinrichtung zeichnet sich dadurch aus, daß sie in der Lage ist, unterschiedlich kodierte Daten zu dekodieren. Solche Kodiereinrichtungen und Dekodiereinrichtungen sind für die unterschiedlichsten Applikationen einsetzbar.

## Beschreibung

Die vorliegende Erfindung betrifft eine Vorrichtung gemäß dem Oberbegriff des Patentanspruchs 1 und eine Vorrichtung gemäß dem Oberbegriff des Patentanspruchs 29, d.h. eine Kodiereinrichtung zum Kodieren von Daten und eine Dekodiereinrichtung zum Dekodieren von Daten.

Kodiereinrichtungen werden beispielsweise, aber bekanntlich bei weitem nicht ausschließlich dazu verwendet, um von einem Sender zu einem Empfänger zu übertragende digitale Daten so umzusetzen, daß die dabei erhaltenen Daten bestimmte Bedingungen erfüllen.

Diese Bedingungen bestehen beispielsweise darin,
- daß die kodierten Daten die Bedingungen für die Übertragung derselben nach einem bestimmten Protokoll, beispielsweise nach dem FlexRay-Protokoll, nach dem byteflight-Protokoll, oder nach dem CAN-Protokoll erfüllen,
- daß die kodierten Daten im Mittel möglichst selten ihren Pegel ändern (um die hohen Frequenzanteile des Frequenzspektrums des kodierten und übertragenen Datenstroms und/oder die elektromagnetische Abstrahlung und/oder das Übersprechen gering zu halten),
- daß die kodierten Daten einen geringen Gleichsignalanteil (z.B. einen geringen Gleichstromanteil) aufweisen (um durch entsprechende Bandpaßfilter niederfrequente Störungen wie beispielsweise Schrotrauschen, Widerstandsrauschen etc. herausfiltern zu können),
- daß die kodierten Daten ungefähr genauso viele Bits mit hohem Pegel wie Bits mit niedrigem Pegel aufweisen (um aus den übertragenen Daten einen als Schwellenwert für die Datenrekonstruktion verwendbaren Gleichsignalanteil gewinnen zu können,
- daß die kodierten Daten nicht zu lange einen bestimmten Pegel aufweisen, und/oder
- daß die kodierten Daten zu einem bestimmten Zeitpunkt einen bestimmten Pegel oder eine bestimmte Pegelfolge aufweisen.

Aufgrund dieser sehr unterschiedlichen und teilweise sogar entgegengesetzten Anforderungen, die an Kodiereinrichtungen gestellt werden oder gestellt werden können, müssen für verschiedene Anwendungen verschiedene Kodiereinrichtungen entwickelt und benutzt werden.

Dies ist sowohl für die Hersteller als auch für die Benutzer ein großes Problem.

Entsprechendes gilt für Dekodiereinrichtungen.

Der vorliegenden Erfindung liegt daher die Aufgabe zugrunde, eine Kodiereinrichtung und eine Dekodiereinrichtung zu schaffen, die sich für verschiedene Applikationen einsetzen läßt.

Diese Aufgabe wird erfindungsgemäß durch die in Patentanspruch 1 beanspruchte Kodiereinrichtung bzw. durch die in Patentanspruch 29 beanspruchte Dekodiereinrichtung gelöst.

Die erfindungsgemäße Kodiereinrichtung zeichnet sich dadurch aus, daß sie in der Lage ist, die zu kodierenden Daten in unterschiedliche Eigenschaften aufweisende Daten umzusetzen; die erfindungsgemäße Dekodiereinrichtung zeichnet sich dadurch aus, daß sie in der Lage ist, unterschiedlich kodierte Daten zu dekodieren.

Dadurch lassen sich die Kodiereinrichtung und die Dekodiereinrichtung für unterschiedliche Applikationen einsetzen.

Vorteilhafte Weiterbildungen der Erfindung sind den Unteransprüchen, der folgenden Beschreibung, und den Figuren entnehmbar.

Die Erfindung wird nachfolgend anhand je eines Ausführungsbeispiels unter Bezugnahme auf die Figuren näher erläutert.

Es zeigen
- Figur 1: das Blockschaltbild einer nachfolgend näher beschriebenen Kodiereinrichtung,
- Figur 2: ein Flußdiagramm zur Veranschaulichung der Arbeitsweise der in Figur 1 gezeigten Kodiereinrichtung,
- Figur 3: das Blockschaltbild einer nachfolgend näher beschriebenen Dekodiereinrichtung, und
- Figur 4: ein Flußdiagramm zur Veranschaulichung der Arbeitsweise der in Figur 3 gezeigten Dekodiereinrichtung.

Die im folgenden beschriebene Kodiereinrichtung zeichnet sich dadurch aus, daß sie in der Lage ist, die zu kodierenden Daten in unterschiedliche Eigenschaften aufweisende Daten umzusetzen, wobei es einstellbar ist, welche Eigenschaften die kodierten Daten aufweisen sollen oder müssen.

Im betrachteten Beispiel ist einstellbar,
- welche Eigenschaften die kodierten Daten aufweisen sollen oder müssen, beispielsweise
- nach welchem Protokoll die kodierten Daten übertragbar sein sollen oder müssen,
- daß die kodierten Daten möglichst viele Pegelwechsel aufweisen sollen oder müssen,
- daß die kodierten Daten möglichst wenige Pegelwechsel aufweisen sollen oder müssen,
- daß die kodierten Daten pro Zeiteinheit eine bestimmte Anzahl von Pegelwechseln aufweisen sollen oder müssen,
- daß die Anzahl der in den kodierten Daten enthaltenen Bits mit hohem Pegel und die Anzahl der in den kodierten Daten enthaltenen Bits mit niedrigem Pegel in einem bestimmten Verhältnis stehen sollen oder müssen,
- daß die Anzahl der in den kodierten Daten enthaltenen Bits mit hohem Pegel oder die Anzahl der in den kodierten Daten enthaltenen Bits mit niedrigem Pegel einen bestimmten Wert nicht unterschreiten oder überschreiten sollen oder dürfen,
- daß die kodierten Daten an bestimmten Stellen Bits mit bestimmten Pegeln aufweisen sollen oder müssen, und/oder
- welche Bits oder Bitfolgen die gewünschten Eigenschaften aufweisen sollen oder müssen,
- unter Verwendung welcher Maßnahmen die Kodierung der zu kodierenden Daten erfolgen kann, und/oder
- daß die Kodiereinrichtung selbst festlegt, welche Maßnahmen zur Kodierung in Frage kommen oder tatsächlich verwendet werden.

Es sei bereits an dieser Stelle darauf hingewiesen, daß die vorstehende Aufzählung nicht als erschöpfende Angabe der Einstellmöglichkeiten anzusehen ist. Prinzipiell können auch beliebige andere oder zusätzliche Einstellungen vorgenommen werden.

Die Maßnahmen, durch welche die Kodiereinrichtung dafür sorgen kann, daß die kodierten Daten die gewünschten Eigenschaften aufweisen, oder daß die kodierten Daten den gewünschten Eigenschaften möglichst nahe kommen, bestehen im betrachteten Beispiel darin, daß
- zusätzliche Bits in die zu kodierenden Daten eingefügt werden,
- bestimmte Bits auf den hohen Pegel oder den niedrigen Pegel gesetzt werden,
- die zu kodierenden Daten logischen und/oder arithmetischen Operationen unterworfen werden, und/oder
- die zu kodierenden Daten unverändert ausgegeben werden.
   Die Auswahl der Maßnahme oder der Maßnahmen, die die Kodiereinrichtung verwendet, um den kodierten Daten die gewünschten Eigenschaften zu verleihen, erfolgt im betrachteten Beispiel basierend auf Zustandsverteilungen, welche angeben, wie viele Bits mit hohem Pegel und wie viele Bits mit niedrigem Pegel innerhalb der dabei jeweils zu berücksichtigenden Daten vorhanden sind.
   Die Zustandsverteilungen, auf welchen die Auswahl der anzuwendenden Kodierungs-Maßnahme(n) beruht, umfassen
- eine Zustandsverteilung, bei welcher die bisher von der Kodiereinrichtung ausgegebenen Daten oder ausgewählte Teile derselben berücksichtigt werden, und
- wenigstens eine Zustandsverteilung, bei welcher die bisher von der Kodiereinrichtung ausgegebenen Daten, und zusätzlich die Daten, die die Kodiereinrichtung ausgeben würde, wenn sie die gerade zu kodierenden Daten unter Verwendung einer der hierfür in Frage kommenden Maßnahmen kodieren würde, oder ausgewählte Teile der genannten Daten berücksichtigt werden.

Die Auswahl der durchzuführenden Kodierungs-Maßnahme erfolgt in Abhängigkeit von einem Vergleich, durch welchen die genannten (Ist-)Zustandsverteilungen miteinander und/oder mit einer Referenz-Zustandsverteilung verglichen werden.

Anstelle der Zustandsverteilungen, welche angeben, wie viele Bits mit hohem Pegel und wie viele Bits mit niedrigem Pegel innerhalb der dabei jeweils zu berücksichtigenden Daten vorhanden sind, können unter Umständen auch vergleichbare Größen, beispielsweise das Verhältnis der Anzahlen der Bits mit hohem Pegel und niedrigem Pegel, oder die Differenz zwischen den Anzahlen der Bits mit hohem Pegel und mit niedrigem Pegel verwendet werden. Entsprechendes gilt übrigens auch für die später beschriebene Dekodiereinrichtung.

Die Auswahl der anzuwendenden Kodierungs-Maßnahmen könnte zumindest in bestimmten Fällen auch unter ausschließlicher Berücksichtigung der bereits kodierten Daten, oder unter ausschließlicher Berücksichtigung der zu kodierenden Daten erfolgen.

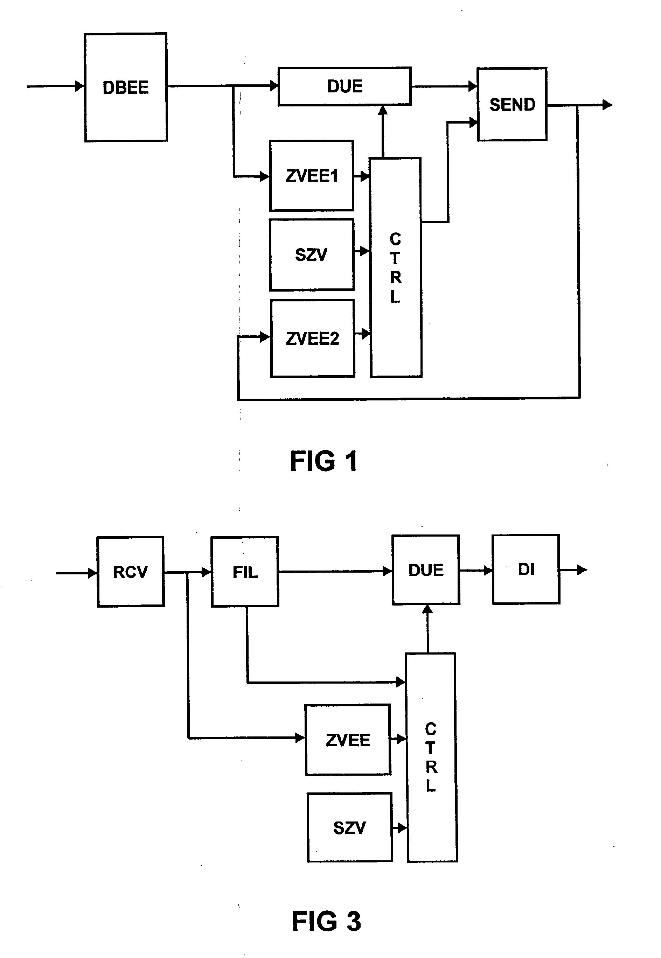

Der Aufbau einer wie vorstehend allgemein beschrieben aufgebauten und arbeitenden Kodiereinrichtung ist in Figur 1 veranschaulicht.

Die in der Figur 1 gezeigte Kodiereinrichtung enthält eine Datenblockerzeugungseinrichtung DBEE, eine erste Zustandsverteilungs-Ermittlungseinrichtung ZVEE1, eine Speichereinrichtung SZV, eine zweite Zustandsverteilungs-Ermittlungseinrichtung ZVEE2, eine Steuereinrichtung CTRL, eine Datenumsetzungseinrichtung DUE, und eine Sendeeinrichtung SEND, wobei
- die Datenblockerzeugungseinrichtung DBEE die der Kodiereinrichtung in Form eines Datenstromes zugeführten zu dekodierenden Daten in Datenpakete zerlegt und diese Datenpakete an die Datenumsetzungseinrichtung DUE und die erste Zustandsverteilungs-Ermittlungseinrichtung ZVEE1 weiterleitet,
- die erste Zustandsverteilungs-Ermittlungseinrichtung ZVEE1 für die empfangenen Daten oder ausgewählte Teile derselben die Zustandsverteilung, d.h. die Anzahl der Bits mit hohem Pegel und die Anzahl der Bits mit niedrigem Pegel ermittelt und an die Steuereinrichtung CTRL weiterleitet,
- die Speichereinrichtung SZV die bereits erwähnte Referenz-Zustandsverteilung der kodierten Daten speichert und an die Steuereinrichtung CTRL weiterleitet, wobei diese Referenz-Zustandsverteilung über eine in der Figur 1 nicht gezeigte Eingabeeinrichtung eingegeben wird oder aus über die Eingabeeinrichtung eingegebenen Daten ermittelt wird,
- die zweite Zustandsverteilungs-Ermittlungseinrichtung ZVEE2 für die aus der Kodiereinrichtung ausgegebenen Daten oder ausgewählte Teile derselben die Zustandsverteilung, d.h. die Anzahl der Bits mit hohem Pegel und die Anzahl der Bits mit niedrigem Pegel ermittelt und an die Steuereinrichtung CTRL weiterleitet,
- die Steuereinrichtung CTRL basierend auf den ihr zugeführten Informationen
- festlegt, unter Verwendung welcher Maßnahmen die Daten zu kodieren sind,
- die Datenumsetzungseinrichtung DUE entsprechend ansteuert, und
- Anzeigedaten, durch die angezeigt wird, unter Verwendung welcher Maßnahmen der betreffende Datenblock kodiert wird, erzeugt und der Sendeeinrichtung SEND zuführt,
- die Datenumsetzungseinrichtung DUE die ihr zugeführten Datenblöcke entsprechend den Vorgaben der Steuereinrichtung CTRL kodiert und an die Sendeeinrichtung SEND weiterleitet,
- die Sendeeinrichtung SEND in die ihr zugeführten Anzeigedaten in die ihr von der Datenumsetzungseinrichtung DUE zugeführten Daten integriert und diese Daten als die kodierten Daten aus der Kodiereinrichtung ausgibt und darüber hinaus der zweiten Zustandsverteilungs-Ermittlungseinrichtung ZVEE2 zuführt.

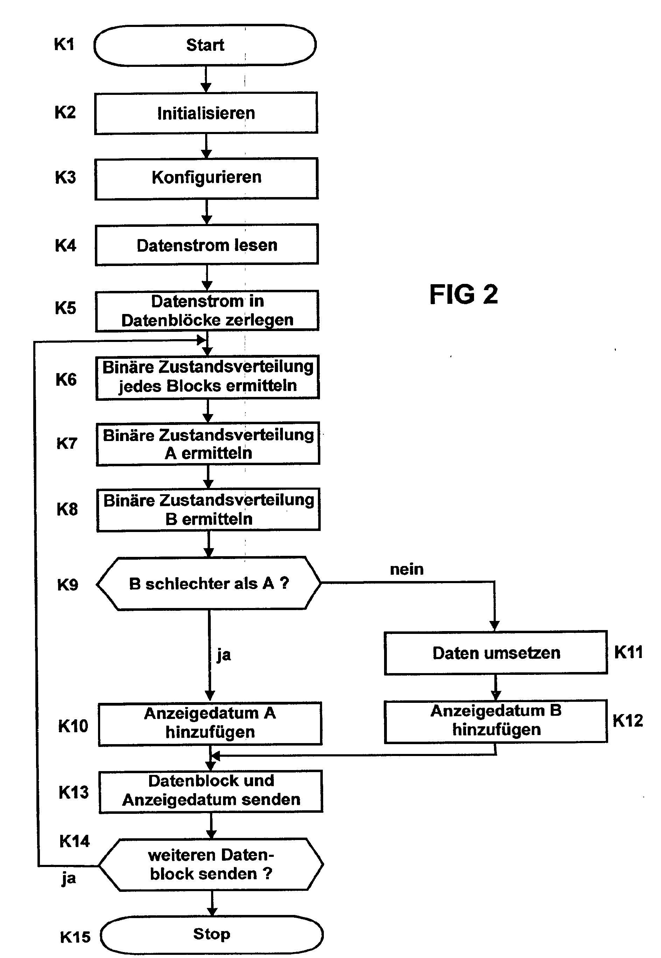

Die in der Figur 1 gezeigte Kodiereinrichtung arbeitet wie es in dem in Figur 2 gezeigten Ablaufdiagramm veranschaulicht ist.

Nach dem Start, d.h. beispielsweise nach der Inbetriebnahme oder nach dem Rücksetzen der Kodiereinrichtung (Schritt K1) wird diese initialisiert (Schritt K2).

Danach werden zur Konfiguration der Kodiereinrichtung dienende Daten eingegeben (Schritt K3). Diese Daten enthalten im betrachteten Beispiel Informationen
- darüber, wie viele Bits die in Schritt K4 zu erzeugenden Datenblöcke jeweils enthalten sollen,
- darüber, für welche Teile (Bits) der jeweiligen Daten die in den Schritten K6, K7 und K8 durchzuführende Zustandsveteilungs-Ermittlung zu erfolgen hat,
- über die Referenz-Zustandsverteilung der Daten oder ausgewählte Teile derselben,
- darüber ob die ausgegebenen Daten Anzeigedaten enthalten sollen, und wo sich diese Daten gegebenenfalls befinden sollen, und
- darüber, wozu die Steuereinrichtung CTRL die Datenumsetzungseinrichtung DUE abhängig von der Referenz-Zustandsverteilung, den verschiedenen Ist-Zustandsverteilungen, und/oder anderen oder weiteren Informationen anzusteuern hat.

Die Referenz-Zustandsverteilung ist im betrachteten Beispiel die gewünschte Zustandsverteilung; es kann sich aber auch um eine ausdrücklich nicht gewünschte Zustandsverteilung oder eine sonstige Zustandsverteilung handeln.

Danach (Schritt K4) kann die Kodiereinrichtung die zu kodierenden Daten, genauer gesagt einen zu kodierenden Datenstrom empfangen.

Der empfangene Datenstrom wird durch die Datenblockerzeugungseinrichtung DBEE in Datenblöcke zerlegt (Schritt K5).

Anschließend (Schritt K6) ermittelt die erste Zustandsverteilungs-Ermittlungseinrichtung ZVEE1 die Zustandsverteilung für diese Datenblöcke, genauer gesagt für die in der Konfiguration (Schritt K3) festgelegten Bits derselben; die in Schritt K6 ermittelte Zustandsverteilung kann (muß aber nicht) bei der in Schritt K8 durchgeführten Zustandsverteilungs-Ermittlung hilfreich sein.

Dann (Schritt K7) ermittelt die zweite Zustandsverteilungs-Ermittlungseinrichtung ZVEE2 die Gesamt-Zustandsverteilung für die bereits kodierten und ausgegebenen Datenblöcke, genauer gesagt für die in der Konfiguration (Schritt K3) festgelegten Bits derselben. Die in Schritt K7 ermittelte Zustandsverteilung wird nachfolgend als Zustandsverteilung A bezeichnet.

Dann (Schritt K8) ermittelt die Steuereinrichtung CTRL die Gesamt-Zustandsverteilung für die bereits kodierten und ausgegebenen Datenblöcke und den gerade zu kodierenden Datenblock, wobei für den gerade zu kodierenden Datenblock von einer Zustandsverteilung ausgegangen wird, die sich ergeben würde, wenn der betreffende Datenblock unter Verwendung der Maßnahme kodiert werden würde, die dafür in Frage kommt, den Datenblock so zu kodieren, daß die kodierten Daten die gewünschten Eigenschafen aufweisen oder den gewünschten Eigenschaften näherkommen als es sonst der Fall ist. Die in Schritt K8 ermittelte Zustandsverteilung wird nachfolgend als Zustandsverteilung B bezeichnet.

Wenn mehrere verschiedene Maßnahmen dafür in Frage kommen, den zu kodierenden Datenblock so zu kodieren, daß die kodierten Daten die gewünschten Eigenschaften aufweisen oder den gewünschten Eigenschaften näherkommen, wird die in Schritt K8 durchgeführte Ermittlung der Zustandsverteilung für jede der möglichen Maßnahmen durchgeführt, wodurch man in Schritt K8 gegebenenfalls Zustandsverteilungen B, C, D, ... erhält.

Im nächsten Schritt (Schritt K9) überprüft die Steuereinrichtung CTRL, welche der in den Schritten K7 und K8 ermittelten Zustandsverteilungen A, B, C, ... der Referenz-Zustandsverteilung am nächsten kommt.

Wenn sich bei dieser Überprüfung herausstellt, daß die in Schritt K7 ermittelte Zustandsverteilung A der Referenz-Zustandsverteilung am nächsten kommt, sorgt die Steuereinrichtung CTRL dafür,
- daß der zu kodierende Datenblock die Datenumsetzungseinrichtung DUE unverändert passiert, und
- daß - sofern die Kodiereinrichtung in Schritt K3 entsprechend konfiguriert wurde - in die auszugebenden Daten Anzeigedaten integriert werden, die anzeigen, daß keine Datenumsetzung stattgefunden hat (Schritt K10).

Wenn sich bei der in Schritt K9 durchgeführten Überprüfung herausstellt, daß eine der in Schritt K8 ermittelten Zustandsverteilungen B, C, D ... der Referenz-Zustandsverteilung am nächsten kommt, sorgt die Steuereinrichtung CTRL dafür,
- daß die Datenumsetzungseinrichtung DUE den zu kodierenden Datenblock unter Verwendung der Maßnahme umsetzt, von deren Verwendung bei der Ermittlung der Zustandsverteilung ausgegangen wurde, die der Referenz-Zustandsverteilung am nächsten kommt (Schritt K11), und
- daß - sofern die Kodiereinrichtung in Schritt K3 entsprechend konfiguriert wurde - in die auszugebenden Daten Anzeigedaten integriert werden, die anzeigen, daß die in Schritt K11 veranlaßte Datenumsetzung stattgefunden hat (Schritt K12).

Danach gibt die Sendeeinrichtung SEND den durch die Datenumsetzungseinrichtung kodierten und durch die Sendeeinrichtung SEND mit den Anzeigedaten versehenen Datenblock aus (Schritt K13).

Anschließend wird überprüft, ob ein weiterer Datenblock zu versenden ist (Schritt K14). Wenn dies der Fall ist, werden die Schritte K6 bis K14 wiederholt. Anderenfalls wird der Kodiervorgang beendet (Schritt K15).

Durch eine derartige Kodiereinrichtung können zu kodierende Daten sehr unterschiedlich kodiert werden. Dies wird nachfolgend anhand einiger Beispiele erläutert.

Das erste Beispiel betrifft die Umsetzung eines Datenstromes in das FlexRay-Format.

Hierbei muß vor jeweils 4 Daten-Bits ein Kontroll-Bit eingefügt werden, wobei das Kontroll-Bit wahlweise ein Bit mit hohem Pegel oder ein Bit mit niedrigem Pegel sein kann. Im betrachteten Beispiel wird davon ausgegangen, daß die kodierten Daten möglichst genauso viele Bits mit niedrigem Pegel wie Bits mit hohem Pegel aufweisen sollen.

Die Maßnahmen, durch welche ein Datenstrom in solche Eigenschaften aufweisende Daten umgesetzt werden kann, bestehen im betrachteten Beispiel darin, daß die eigentlich zu übertragenden (Nutz-)Daten wahlweise unverändert oder negiert übertragen werden, und daß die Kontroll-Bits zur Anzeigedaten-Übertragung verwendet werden.

In diesem Fall wird die Kodiereinrichtung so konfiguriert,
- daß der zu kodierende Datenstrom in vier Bits umfassende Blöcke zerlegt wird,
- daß bei den Zustandsverteilungs-Ermittlungen jeweils alle Bits der Datenblöcke, für welche die Zustandsverteilung jeweils ermittelt wird, berücksichtigt werden,
- daß die Referenz-Zustandsverteilung darin besteht, daß die Differenz zwischen der Anzahl der Bits mit niedrigem Pegel und der Anzahl der Bits mit hohem Pegel in den kodierten Daten möglichst gering ist,
- daß die Maßnahmen, die zur Verfügung stehen, um zu erreichen, daß die kodierten Daten die gewünschten Eigenschaften aufweisen, darin bestehen, daß die zu kodierenden Daten unverändert übernommen oder bitweise invertiert werden,
- daß in die zu übertragenden Daten Anzeigedaten einzufügen sind, und
- daß die Kontroll-Bits als Anzeigedaten verwendet werden.

Es dürfte einleuchten und bedarf keiner näheren Erläuterung, daß sich die zu kodierenden Daten damit in die gewünschten Eigenschaften aufweisende oder den gewünschten Eigenschaften nahe kommende Daten umsetzen lassen.

Durch die beschriebene Kodiereinrichtung kann ein Datenstrom auch in das byteflight-Format aufweisende Daten umgesetzt werden.

Hierbei muß vor jeweils 8 Bits ein einen niedrigen Pegel aufweisendes Bit, und nach diesen 8 Bits ein einen hohen Pegel aufweisendes Bit eingefügt werden. Eine besondere Zustandsverteilung der kodierten Daten wird der kodierten Daten wird im betrachteten Beispiel nicht angestrebt.

Die Maßnahmen, durch welche ein Datenstrom in die genannten Eigenschaften (bestimmte zusätzliche Bits an bestimmten Stellen innerhalb der kodierten Daten) aufweisende Daten umgesetzt werden kann, besteht in einem Einfügen der betreffenden Daten an den betreffenden Stellen.

In diesem Fall wird die Kodiereinrichtung so konfiguriert,
- daß der zu kodierende Datenstrom in 8 Bits umfassende Datenblöcke zerlegt wird,
- daß bei den Zustandsverteilungs-Ermittlungen jeweils nur die hinzuzufügenden bzw. hinzugefügten Bits zu berücksichtigen sind,
- daß die Referenz-Zustandsverteilung darin besteht, daß in den erzeugten bzw. zu erzeugenden 10-Bit-Blöcken möglichst viele 0-te Bits mit niedrigem Pegel und möglichst viele 9-te Bits mit hohem Pegel vorhanden sind,
- daß die Maßnahmen, die zur Verfügung stehen, um zu erreichen, daß die kodierten Daten die gewünschten Eigenschaften aufweisen, darin bestehen, daß die hinzuzufügenden Bits durch die Datenumsetzungseinrichtung DUE hinzugefügt werden, und
- daß in die ausgegebenen Daten keine Anzeigedaten eingefügt sind.

Auf diese Art und Weise lassen sich durch die beschriebene Kodiereinrichtung auch zusätzliche Bits in die zu kodierenden Daten einfügen.

Durch eine entsprechende Konfiguration der beschriebenen Kodiereinrichtung lassen sich durch diese auch die sogenannten stuffing bits in über einen CAN-Bus zu übertragende Daten einfügen.

Es dürfte einleuchten, daß die beschriebene Kodiereinrichtung auch für beliebige andere Kodierungen von zu kodierenden Daten verwendet werden kann.

Die Art und Weise, auf welche die beschriebene Kodiereinrichtung die jeweiligen Kodierungen durchführt, ist teilweise aufwendiger als es bei einer Kodiereinrichtung der Fall ist, die nur eine einzige Kodierung durchführen kann. Dafür ist die Kodiereinrichtung aber in der Lage, ohne Veränderung der in der Figur 2 gezeigten prinzipiellen Vorgehensweise beliebige Kodierungen durchzuführen.

Die wie beschrieben kodierten Daten können durch die nachfolgend näher beschriebene Dekodiereinrichtung wieder dekodiert werden.

Die beschriebene Dekodiereinrichtung zeichnet sich dadurch aus, daß sie in der Lage ist, unterschiedlich kodierte Daten zu dekodieren.

Dabei werden die zur Dekodierung verwendeten Maßnahmen abhängig vom Inhalt und/oder von den Eigenschaften, die die zu dekodierenden Daten aufweisen, festgelegt.

Im betrachteten Beispiel werden der Inhalt und die Eigenschaften der zu kodierenden Daten anhand der Anzeigedaten und/oder anhand der Zustandsverteilungen bestimmt, die die empfangenen Daten oder ausgewählte Teile derselben aufweisen.

Diese genannten Zustandsverteilungen umfassen
- eine Zustandsverteilung, bei welcher die bisher von der Dekodiereinrichtung empfangenen Daten oder ausgewählte Teile derselben berücksichtigt werden, und
- eine Referenz-Zustandsverteilung für die von der Dekodiereinrichtung empfangenen Daten oder ausgewählte Teile derselben,
   und werden miteinander verglichen, wobei es vom Ergebnis dieses Vergleichs abhängt, wie die zu dekodierenden Daten dekodiert werden.

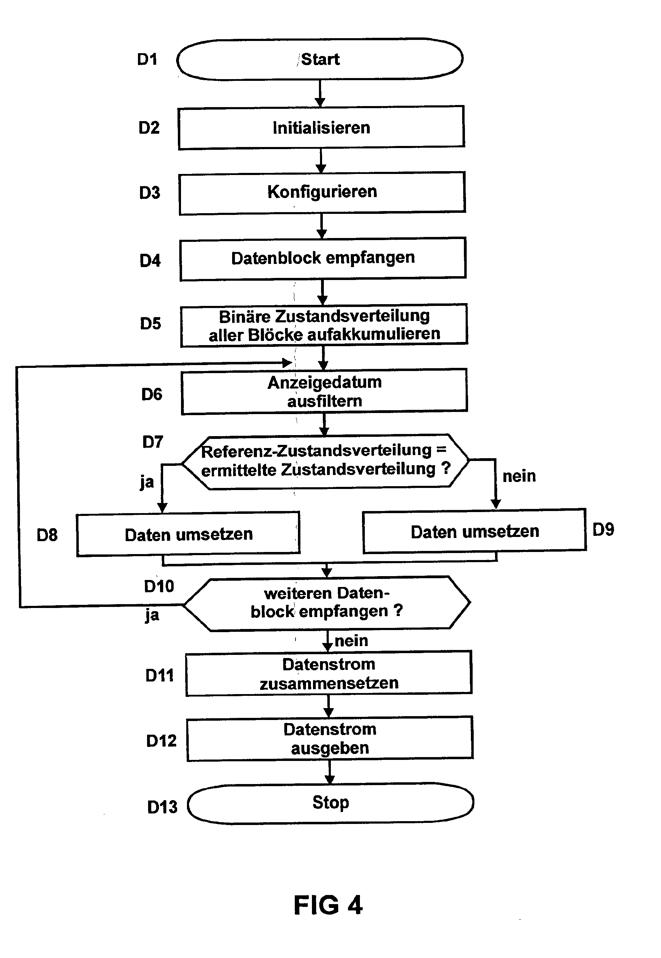

Der Aufbau einer solchen Dekodiereinrichtung ist in Figur 3 gezeigt.

Die in der Figur 3 gezeigte Dekodiereinrichtung enthält eine Empfangseinrichtung RCV, einen Filter FIL, eine Zustandsverteilungs-Ermittlungseinrichtung ZVEE, eine Speichereinrichtung SZV, eine Steuereinrichtung CTRL, eine Datenumsetzungseinrichtung DUE, und eine Datenstromerzeugungseinrichtung DSEE, wobei
- die Empfangseinrichtung RCV die zu dekodierenden Daten, genauer gesagt die von der Kodiereinrichtung erzeugten und ausgegebenen Datenblöcke empfängt und an den Filter FIL und die Zustandsverteilungs-Ermittlungseinrichtung ZVEE weiterleitet,
- der Filter FIL die von der Kodiereinrichtung eingefügten Anzeigedaten, welche anzeigen, wie die Daten kodiert wurden, aus den Datenblöcken herausfiltert und an die Steuereinrichtung CTRL weiterleitet, sowie die Datenblöcke an die Datenumsetzungseinrichtung DUE weiterleitet,
- die Zustandsverteilungs-Ermittlungseinrichtung ZVEE für die empfangenen Daten oder ausgewählte Teile derselben die Zustandsverteilung, d.h. die Anzahl der Bits mit hohem Pegel und die Anzahl der Bits mit niedrigem Pegel ermittelt und an die Steuereinrichtung CTRL weiterleitet,
- die Speichereinrichtung SZV eine über eine in der Figur 3 nicht gezeigte Eingabeeinrichtung eingegebene oder eine aus über die Eingabeeinrichtung eingegebenen Daten ermittelte Referenz-Zustandsverteilung speichert und an die Steuereinrichtung CTRL weiterleitet,
- die Steuereinrichtung CTRL basierend auf den ihr zugeführten Informationen festlegt, unter Verwendung welcher Maßnahmen die Daten zu dekodieren sind, und die Datenumsetzungseinrichtung DUE entsprechend ansteuert, und
- die Datenstromerzeugungseinrichtung DSEE die paketweise dekodierten Daten zu einem kontinuierlichen Datenstrom zusammensetzt und ausgibt.

Die in der Figur 3 gezeigte Dekodiereinrichtung arbeitet wie es in dem in Figur 4 gezeigten Ablaufdiagramm veranschaulicht ist.

Nach dem Start, d.h. beispielsweise nach der Inbetriebnahme oder nach dem Rücksetzen der Dekodiereinrichtung (Schritt D1) wird diese initialisiert (Schritt D2).

Danach (Schritt D3) werden zur Konfiguration der Dekodiereinrichtung dienende Daten eingegeben. Diese Daten enthalten im betrachteten Beispiel Informationen
- darüber, ob und gegebenenfalls für welche Teile der empfangenen Daten eine Zustandsverteilung ermittelt werden soll,
- über die Referenz-Zustandsverteilung,
- darüber ob in den empfangenen Daten Anzeigedaten enthalten sind, und wo sich diese Daten gegebenenfalls befinden, und
- darüber, wie die Steuereinrichtung CTRL basierend auf der Referenz-Zustandsverteilung, der Ist-Zustandsverteilung, und/oder den Anzeigedaten die Datenumsetzungseinrichtung DUE anzusteuern hat.

Danach (Schritt D4) kann die Dekodiereinrichtung zu dekodierende Daten, genauer gesagt einen zu dekodierenden Datenblock empfangen.

Wenn durch die Empfangseinrichtung RCV ein Datenblock empfangen wurde, werden - abhängig von der in Schritt D3 durchgeführten Konfiguration -
- durch die Zustandsverteilungs-Ermittlungseinrichtung ZVEE die benötigte Zustandsverteilung ermittelt (Schritt D5), und/oder
- durch den Filter FIL die Anzeigedaten aus dem empfangenen Datenblock herausgefiltert (Schritt D6).

Zu Schritt D5 sei angemerkt, daß der Ermittlung der Zustandsverteilung wahlweise "nur" der gerade empfangene Datenblock oder ausgewählte Teile desselben oder "nur" die zuvor empfangenen Datenblöcke oder ausgewählte Teile derselben, oder alle bisher empfangenen Datenblöcke oder ausgewählte Teile derselben zugrundegelegt werden können.

Im Anschluß daran (Schritt D7) wird ein Vergleich zwischen der Referenz-Zustandsverteilung und der Ist-Zustandsverteilung durchgeführt.

Abhängig vom Ergebnis dieses Vergleichs wird sodann (Schritte D8 bzw. D9) unter zusätzlicher oder alleiniger Berücksichtigung der Referenz-Zustandsverteilung, der Ist-Zustandsverteilung, und/oder der Anzeigedaten durch die Steuereinrichtung festgelegt, unter Verwendung welcher Maßnahmen die Decodierung des Datenblocks durch die Datenumsetzungseinrichtung DUE zu erfolgen hat. Die Steuereinrichtung CTRL steuert die Datenumsetzungseinrichtung DUE entsprechend an, und diese dekodiert den Datenblock entsprechend.

Danach (Schritt D10) überprüft die Dekodiereinrichtung, ob ein weiterer Datenblock zu empfangen ist.

Ist dies der Fall, erfolgt ein Rücksprung auf Schritt D4. Anderenfalls setzt die Datenstromerzeugungseinrichtung DSEE die dekodierten Datenblöcke zu einem kontinuierlichen Datenstrom zusammen (Schritt D11) und gibt diesen aus (Schritt D12).

Durch eine derartige Dekodiereinrichtung kann eine Vielzahl von unterschiedlich kodierten Daten dekodiert werden.

Bei der Dekodierung von FlexRay-Daten geschieht dies dadurch, daß die darin enthaltenen Anzeigedaten extrahiert werden und in alleiniger Abhängigkeit von diesen (unabhängig vom Ergebnis des in Schritt D7 durchgeführten Vergleichs) festlegt, wie die Daten zu dekodieren sind.

Statt dessen könnte auch vorgesehen werden, mit Zustandsverteilungen zu arbeiten, in welchen nur die Anzeigedaten berücksichtigt sind, und dann abhängig vom Ergebnis des in Schritt D7 durchgeführten Vergleichs festzulegen, wie die Daten zu dekodieren sind.

Bei der Dekodierung von byteflight-Daten kann unabhängig von Anzeigedaten und unabhängig vom Ergebnis des in Schritt D7 durchgeführten Vergleichs festgelegt werden, daß das jeweils 0-te und das jeweils 9-te Bit jedes Datenblocks zu entfernen sind. Wenn, obgleich das Ergebnis des in Schritt D7 durchgeführten Vergleichs zur Festlegung der Dekodierung nicht erforderlich ist, dennoch Zustandsverteilungen ermittelt und mit der Referenz-Zustandsverteilung verglichen werden, kann festgestellt werden, ob die durch die Kodiereinrichtung eingefügten (0-ten und 9-ten) Bits die vorgeschriebenen Werte aufweisen und gegebenenfalls eine Fehlermeldung ausgegeben werden.

Die Dekodierung von CAN-Daten kann dadurch erfolgen, daß unter Verwendung der Zustandsverteilungen überprüft wird, ob in den empfangenen Daten stuffing bits enthalten sind, und daß abhängig von dem in Schritt D7 durchgeführten Vergleich festgelegt wird, ob ein stuffing bit zu entfernen ist.

Durch eine entsprechende Konfiguration der Dekodiereinrichtung kann diese beliebig kodierte Daten dekodieren.

Die Art und Weise, auf welche die beschriebene Dekodiereinrichtung die jeweiligen Dekodierungen durchführt, ist teilweise aufwendiger als es bei einer Dekodiereinrichtung der Fall ist, die nur die eine bestimmte Dekodierung durchführen kann. Dafür ist die Dekodiereinrichtung aber in der Lage, beliebige Dekodierungen durchzuführen.

Die beschriebene Kodiereinrichtung und die beschriebene Dekodiereinrichtung können mithin für die unterschiedlichsten Applikationen verwendet werden; es sind einfach aufgebaute und universell einsetzbare Kodier- und Dekodiereinrichtungen.

### Bezugszeichenliste

- CTRL: Steuereinrichtung
- DBEE: Datenblockerzeugungseinrichtung
- DSEE: Datenstromerzeugungseinrichtung
- DUE: Datenumsetzungseinrichtung
- FIL: Filter
- RCV: Empfangseinrichtung
- SEND: Sendeeinrichtung
- SZV: Speichereinrichtung
- ZVEE: Zustandsverteilungs-Ermittlungseinrichtung
- ZVEE1: erste Zustandsverteilungs-Ermittlungseinrichtung
- ZVEE2: zweite Zustandsverteilungs-Ermittlungseinrichtung

## Patentansprüche

1. Kodiereinrichtung zum Kodieren von Daten,
**dadurch gekennzeichnet,**
**daß** die Kodiereinrichtung in der Lage ist, die zu kodierenden Daten in unterschiedliche Eigenschaften aufweisende Daten umzusetzen.

2. Kodiereinrichtung nach Anspruch 1,
**dadurch gekennzeichnet,**
**daß** einstellbar ist, welche Eigenschaften die kodierten Daten aufweisen sollen oder müssen.

3. Kodiereinrichtung nach Anspruch 1 oder 2,
**dadurch gekennzeichnet,**
**daß** einstellbar ist, nach welchem Protokoll die kodierten Daten übertragbar sein sollen oder müssen.

4. Kodiereinrichtung nach einem der vorhergehenden Ansprüche,
**dadurch gekennzeichnet,**
**daß** einstellbar ist, daß die kodierten Daten möglichst viele Pegelwechsel aufweisen sollen oder müssen.

5. Kodiereinrichtung nach einem der Ansprüche 1 bis 3,
**dadurch gekennzeichnet,**
**daß** einstellbar ist, daß die kodierten Daten möglichst wenige Pegelwechsel aufweisen sollen oder müssen.

6. Kodiereinrichtung nach einem der Ansprüche 1 bis 3,
**dadurch gekennzeichnet,**
**daß** einstellbar ist, daß die kodierten Daten pro Zeiteinheit eine bestimmte Anzahl von Pegelwechseln aufweisen sollen oder müssen.

7. Kodiereinrichtung nach einem der vorhergehenden Ansprüche,
**dadurch gekennzeichnet,**
**daß** einstellbar ist, daß die Anzahl der in den kodierten Daten enthaltenen Bits mit hohem Pegel und die Anzahl der in den kodierten Daten enthaltenen Bits mit niedrigem Pegel in einem bestimmten Verhältnis stehen sollen oder müssen.

8. Kodiereinrichtung nach einem der vorhergehenden Ansprüche,
**dadurch gekennzeichnet,**
**daß** einstellbar ist, daß die Anzahl der in den kodierten Daten enthaltenen Bits mit hohem Pegel oder die Anzahl der in den kodierten Daten enthaltenen Bits mit niedrigem Pegel einen bestimmten Wert nicht unterschreiten oder überschreiten sollen oder dürfen.

9. Kodiereinrichtung nach einem der vorhergehenden Ansprüche,
**dadurch gekennzeichnet,**
**daß** einstellbar ist, daß die kodierten Daten an bestimmten Stellen Bits mit bestimmten Pegeln aufweisen sollen oder müssen.

10. Kodiereinrichtung nach einem der vorhergehenden Ansprüche,
**dadurch gekennzeichnet,**
**daß** einstellbar ist, welche Bits oder Bitfolgen die gewünschten Eigenschaften aufweisen sollen oder müssen.

11. Kodiereinrichtung nach einem der vorhergehenden Ansprüche,
**dadurch gekennzeichnet,**
**daß** einstellbar ist, unter Verwendung welcher Maßnahmen die Kodierung der zu kodierenden Daten erfolgen kann.

12. Kodiereinrichtung nach einem der vorhergehenden Ansprüche,
**dadurch gekennzeichnet,**
**daß** die Kodiereinrichtung abhängig von den Eigenschaften, die die kodierten Daten aufweisen sollen oder müssen, festlegt, welche Maßnahmen zur Erreichung dieses Ziels in Frage kommen.

13. Kodiereinrichtung nach Anspruch 11 oder 12,
**dadurch gekennzeichnet,**
**daß** die Maßnahmen das Einfügen zusätzlicher Bits in die zu kodierenden Daten umfassen.

14. Kodiereinrichtung nach einem der Ansprüche 11 bis 13,
**dadurch gekennzeichnet,**
**daß** die Maßnahmen das Setzen ausgewählter Bits auf den hohen Pegel oder den niedrigen Pegel umfassen.

15. Kodiereinrichtung nach einem der Ansprüche 11 bis 14,
**dadurch gekennzeichnet,**
**daß** die Maßnahmen umfassen, daß die zu kodierenden Daten logischen und/oder arithmetischen Operationen unterworfen werden.

16. Kodiereinrichtung nach einem der Ansprüche 11 bis 15,
**dadurch gekennzeichnet,**
**daß** die Maßnahmen eine unveränderte Ausgabe der zu kodierenden Daten umfassen.

17. Kodiereinrichtung nach einem der Ansprüche 11 bis 16,
**dadurch gekennzeichnet,**
**daß** die Kodiereinrichtung überprüft, unter Verwendung welcher Maßnahme oder unter Verwendung welcher Maßnahmen die zu kodierenden Daten kodiert werden müssen, damit den gewünschten Eigenschaften der kodierten Daten am nächsten gekommen werden kann, und daß die Kodiereinrichtung die dabei ermittelte Maßnahme verwendet, um die zu kodierenden Daten zu kodieren.

18. Kodiereinrichtung nach Anspruch 17,
**dadurch gekennzeichnet,**
**daß** die Kodiereinrichtung bei der Überprüfung sowohl die bereits ausgegebenen Daten als auch die gerade zu kodierenden Daten berücksichtigt.

19. Kodiereinrichtung nach Anspruch 18,
**dadurch gekennzeichnet,**
**daß** die Überprüfung basierend auf Zustandsverteilungen erfolgt, wobei die Zustandsverteilungen angeben, wie viele Bits mit hohem Pegel und wie viele Bits mit niedrigem Pegel innerhalb der dabei jeweils zu berücksichtigenden Daten vorhanden sind.

20. Kodiereinrichtung nach Anspruch 19,
**dadurch gekennzeichnet,**
**daß** die Zustandsverteilungen, auf welchen die Überprüfung basiert, eine Zustandsverteilung umfassen, bei welcher die bisher von der Kodiereinrichtung ausgegebenen Daten oder ausgewählte Teile derselben berücksichtigt werden.

21. Kodiereinrichtung nach Anspruch 19 oder 20,
**dadurch gekennzeichnet,**
**daß** die Zustandsverteilungen, auf welchen die Überprüfung basiert, eine Zustandsverteilung umfassen, bei welcher die bisher von der Kodiereinrichtung ausgegebenen Daten, und zusätzlich die Daten, die die Kodiereinrichtung ausgeben würde, wenn die gerade zu kodierenden Daten unter Verwendung einer der hierfür in Frage kommenden Maßnahmen kodieren würde, oder ausgewählte Teile der genannten Daten berücksichtigt werden.

22. Kodiereinrichtung nach einem der Ansprüche 19 bis 21,
**dadurch gekennzeichnet,**
**daß** die Überprüfung darin besteht, daß die Zustandsverteilungen miteinander und/oder mit einer Referenz-Zustandsverteilung verglichen werden.

23. Kodiereinrichtung nach einem der Ansprüche 17 oder 19 bis 22,
**dadurch gekennzeichnet,**
**daß** die Kodiereinrichtung bei der Überprüfung ausschließlich die bereits ausgegebenen Daten berücksichtigt.

24. Kodiereinrichtung nach einem der Ansprüche 17 oder 19 bis 22,
**dadurch gekennzeichnet,**
**daß** die Kodiereinrichtung bei der Überprüfung ausschließlich die gerade zu kodierenden Daten berücksichtigt.

25. Kodiereinrichtung nach einem der vorhergehenden Ansprüche,
**dadurch gekennzeichnet,**
**daß** die Kodiereinrichtung Informationen über die zur Kodierung verwendeten Maßnahmen ausgibt.

26. Kodiereinrichtung nach Anspruch 25,
**dadurch gekennzeichnet,**
**daß** die Kodiereinrichtung die Informationen über die zur Kodierung verwendeten Maßnahmen in die kodierten Daten integriert.

27. Kodiereinrichtung nach einem der vorhergehenden Ansprüche,
**dadurch gekennzeichnet,**
**daß** die Kodiereinrichtung die zu kodierenden Daten in Datenblöcke unterteilt und jeweils die Daten eines Blocks kodiert.

28. Kodiereinrichtung nach Anspruch 27,
**dadurch gekennzeichnet,**
**daß** die Kodiereinrichtung die Datenblöcke unabhängig voneinander unter Verwendung verschiedener Maßnahmen kodieren kann.

29. Dekodiereinrichtung zum Dekodieren von Daten,
**dadurch gekennzeichnet,**
**daß** die Dekodiereinrichtung in der Lage ist, unterschiedlich kodierte Daten zu dekodieren.

30. Dekodiereinrichtung nach Anspruch 29,
**dadurch gekennzeichnet,**
**daß** die Dekodiereinrichtung die zur Dekodierung verwendeten Maßnahmen abhängig von den zu dekodierenden Daten festlegt.

31. Dekodiereinrichtung nach Anspruch 29 oder 30,
**dadurch gekennzeichnet,**
**daß** die Dekodiereinrichtung die zur Dekodierung verwendeten Maßnahmen abhängig von den Eigenschaften festlegt, die die zu dekodierenden Daten aufweisen.

32. Dekodiereinrichtung nach einem der Ansprüche 29 bis 31,
**dadurch gekennzeichnet,**
**daß** die Dekodierung abhängig von Zustandsverteilungen erfolgt, wobei die Zustandsverteilungen angeben, wie viele Bits mit hohem Pegel und wie viele Bits mit niedrigem Pegel innerhalb der dabei jeweils zu berücksichtigenden Daten vorhanden sind.

33. Dekodiereinrichtung nach Anspruch 32,
**dadurch gekennzeichnet,**
**daß** die Zustandsverteilungen, in Abhängigkeit von welchen die Dekodierung erfolgt, eine Zustandsverteilung umfassen, bei welcher die bisher von der Dekodiereinrichtung empfangenen Daten oder ausgewählte Teile derselben berücksichtigt werden.

34. Dekodiereinrichtung nach Anspruch 32 oder 33,
**dadurch gekennzeichnet,**
**daß** die Zustandsverteilungen, in Abhängigkeit von welchen die Dekodierung erfolgt, eine Referenz-Zustandsverteilung umfassen.

35. Dekodiereinrichtung nach einem der Ansprüche 32 bis 34,
**dadurch gekennzeichnet,**
**daß** die Maßnahmen, unter Verwendung welcher die Dekodiereinrichtung die Dekodierung durchführt, abhängig vom Ergebnis eines Vergleichs der Zustandsverteilungen festgelegt werden.

36. Dekodiereinrichtung nach einem der Ansprüche 29 bis 35,
**dadurch gekennzeichnet,**
**daß** die Dekodierung der Daten abhängig von in den zu dekodierenden Daten enthaltenen Informationen erfolgt.

37. Dekodiereinrichtung nach Anspruch 36,
**dadurch gekennzeichnet,**
**daß** die Informationen, in Abhängigkeit von welchen die Dekodierung erfolgt, Informationen über die Maßnahmen sind, unter Verwendung welcher die Kodierung der zu dekodierenden Daten erfolgt ist.
